# EUROPEAN PATENT APPLICATION

(11) **EP 1 491 097 A1**
(43) Date of publication of application: **29.12.2004**
(21) Application number: 03447171.4
(22) Date of filing: 24.06.2003
(51) Int. Cl.: A23G 9/00

(54) **Low-trans fats for confectionery fat compositions**

(71) Applicant: Fuji Oil Europe, B-9042 Gent (BE)
(72) Inventor: Cleenewerck, Bernard, 9185 Wachtebeke (BE)
(74) Representative: Luys, Marie-José

(57) **Abstract**

The present invention relates to a process for the production of a fat composition, suitable for use as a confectionery fat. According to this invention a starting fat composition having the following glyceride composition :
- S₂U between 30 and 80 wt. %, preferably between 40 and 70 wt. %, most preferably between 45 and 65 wt. %
- SU₂ + U₃ < 60 wt. %, preferably between 10 and 50 wt. %, most preferably between 20 and 40 wt. %,
- S₃ < 20 wt. %, preferably less than 15 wt. %, most preferably less than 10 wt. %
- a diglyceride content between 3 and 12 wt. %
- the starting fat composition containing between 10 and 100 wt. %, preferably 20 to 80 wt. %, most preferably between 30 and 70wt. % of interesterified fat,
is subjected to a catalytic hydrogenation so as to obtain a first fat with a trans fatty acid content of less than 30 wt%, preferably less than 25 wt%, most preferably less than 20 wt%, and in that the first fat is incorporated in the fat composition, the glyceride contents being expressed as wt. % with respect to the total amount of di- and triglycerides, in which S means a saturated fatty acid with a hydrocarbon chain length of 14-24 carbon atoms, U means unsaturated fatty acid with a hydrocarbon chain length of 14-24 carbon atoms.

## Description

The present invention relates to a process for producing a fat composition suitable for use as confectionery fat, as described in the preamble of the first claim. The present invention also relates to the fat composition as such and to the use of the fat composition in several confectionery applications.

### 1. BACKGROUND OF THE INVENTION.

### 1.1. Filling fats and cream fats.

A first important application area of confectionery fats is the so-called filling and cream fats. Filling and cream fats are used for the production of for example soft centres for pralines or confectionery bars or for creams used in or on biscuits or wafers. To be suitable for use as a cream and/or filling fat, it is important that the fat has specific properties such as good melting properties in the mouth, good creaminess as well as a stable crystal structure. Several types of fats capable of providing these properties are known in the art.

A first class of fats suitable for use as filling and/or cream fats includes the so-called lauric fats. The lauric fats are derived from coconut oil or palm kernel oil and contain a high amount of lauric and myristic acid. By subjecting these lauric fats to a fractionation and/or a hydrogenation reaction, a lauric fat with a steep SFC-profile can be obtained, i.e. a lauric fat of which the solid fat content (SFC) as a function of temperature is high at room temperature, whereas at body temperature the solid fat content is low and the fat is completely molten. This sharp transition from solid to liquid gives a cool sensation in the mouth. Besides showing a steep SFC-profile, lauric fats show a quick solidification, which is an advantage when used in fillings and creams. Although they are frequently applied in practise, lauric type fats have a number of disadvantages, a major disadvantage being the risk to saponification of the lauric acid upon ageing, involving the occurrence of a bad taste. Another disadvantage of lauric fats is their high saturated fatty acid content, often over 80%, which is considered an important nutritional disadvantage.

A second class of cool melting filling and cream fats is based on fractionated palm oil. Palm oil as such shows a rather flat SFC-curve with a SFC at 20°C of only 25 %, while at 35°C the SFC is 6%. By subjecting palm oil to a fractionation process a product with steeper SFC-profile can be obtained. Fractionation of palm oil is carried out by cooling palm oil to a certain temperature, until a liquid phase is obtained containing triglycerides with a the lower melting point, and a solid phase containing triglycerides with a higher melting point. Reduction of the tailing effect of the SFC curve is achieved by removing the high melting part, which mainly consists of trisaturated triglycerides like tripalmitine. Fats associated with this tailing cause a waxy feeling in the mouth upon eating. In a next stage, through removal of the part with the lower melting temperature, which mainly comprises tri- or di-unsaturated triglycerides like tri-oleine or 1-palmitic 2-3-oleic triglycerides, the SFC at room temperature is increased. The fraction remaining after removal of the higher and lower melting part of the palm oil is commonly indicated by the name PMF (palm mid fraction).

The most important advantages of PMF-based filling and cream fats are their non-lauric nature, the lower content of saturated fatty acids, the fresh melting sensation upon eating and the fact that PMF is a non-hydrogenated fat. A major disadvantage of PMF however resides in the rather long and laborious fractionation process involved, together with the rather low production yields, which renders the product expensive: starting from palm oil with most fractionation processes, only 25-30 % of PMF is obtained. The yields of hard PMF obtained via double fractionation are even lower. A further disadvantage is the slow solidification rate of PMF, which necessitates in the confectionery plant the use of devices with high cooling capacities. Besides this, PMF based fats show a risk to re-crystallisation, causing "graininess" of the final product when stored for some time, in particular in case no tempering is applied.

A third type of filling and cream fats is based on hydrogenated liquid oils or hydrogenated olein fractions. This type of fat compositions is characterised by a good creaminess and good melting properties, although they may show less cooling sensation in the mouth, which is typical for the two previous types of fat compositions. Products containing these fats show a quick solidification and a stable texture. In addition to this, hydrogenated liquid oils and olein fractions are less expensive compared to the former products since their raw materials are largely available and their processing is less complicated as compared to fractionation of palm oil. The presence of trans fatty acids entails the advantage of improving the crystallisation rate of the fat composition containing them. The big disadvantage of the use of hydrogenated liquid oils and olein fractions however is their too high content of trans fatty acids (TFA), which has become a health concern, the importance of which is increasing. In fact, trans fatty acids are unsaturated fatty acids. However, they have undesirable effects comparable to or even worse than saturated fatty acids (SFA). This is why there is an interest to not only control the SFA level of a fat composition, but to control also the sum of the TFA and SFA levels. To get products with steep SFC-profiles, the hydrogenation reaction is mostly carried out in the presence of a trans-specific catalyst, for example S-poisoned Ni-catalysts.

From the above, it will become clear that there is a need to a fat composition suitable for use as a confectionery fat and to a method for producing such a fat composition. There is a need to a fat composition which preferably is non-lauric, which is characterised by a good melting in the mouth without involving waxiness, which shows a sufficiently high crystallisation rate and has an interesting nutritional profile, which means that the composition should have a low content of both saturated and trans fatty acids. Furthermore it is of importance that the fat composition shows a low risk to re-crystallisation or fat blooming when used in combination with enrobed chocolate.

From EP-A-547.651 it is known to use in filling fats a blend of (i) a non lauric fat, in particular a mid-fraction obtained from wet fractionation of hardened soybean oil containing fat mixtures; and (ii) a liquid, trans-hardened high stability oil, in particular olein fractions obtainable from wet fractionation of hardened soybean oil containing fat mixtures. Thereto, combinations of soybeanoil and palm oil olein are subjected to a trans-selective hydrogenation reaction. In the wet fractionation preferably aceton is used as a solvent, for the trans-selective hydrogenation a sulphided Ni-catalyst is found very suitable. The blends of mid-fractions and olein-fractions of such trans-hydrogenated combinations give filling fats with a minimised waxiness, a steep melting curve and, a steep SFC-profile with N20 > 40 % and N30 < 8 %, and good mouthfeel. However, the trans fatty acid content of these fat composition ranges from 35 to 45%, which is too high.

Patent application PCT/BE02/00045 discloses a process for the production of a fat composition suitable for use as confectionery fat, having a low trans fatty acid content. This fat composition proofed to be very suitable for applications like confectionery fillings and creams. According to the process of PCT/BE02/00045, a fat composition containing palm oil or a palm oil fraction, the fat composition having a specific composition in terms of triglyceride and diglyceride content, is subjected to a catalytic hydrogenation, with the aim of obtaining a first fat the trans and saturated fatty acid content of which is increased to only a limited extent. The thus obtained first fat is incorporated in a fat composition. According to PCT/BE02/00045 it is possible to combine the first fat with a second fat with low trans fatty acid content. Suitable fat composition for use as second include for example a soft palm fraction or a liquid oil. Confectionery creams containing the fat composition of PCT/BE02/00045 show a good mouth feel and virtually no graininess.

### 1.2. Coating fats and hard centre fats.

Besides the above discussed use of confectionery fats in fillings and creams, confectionery fats of a harder type know a second important application area, namely in hard centres and in confectionery coatings and tablets. These include the so called hard butters. Hard centres is understood to designate confectionery centres with a firm texture, that are usually produced by extrusion. Hard butters are characterised by a steep SFC-profile: they have a high solid fat content and are hard at room temperature. At body temperature the hard butters melt and their solid fat content becomes negligible. These confectionery fats have a SFC profile that is similar to that of cocoa butter, which is the traditional chocolate fat.

Over the years, three main classes of hard butters have been developed for use in coatings or tablets including (i) lauric cocoa butter substitutes, (ii) cocoa butter equivalents (CBE) containing palm oil fractions combined with so-called wild fats like illipe or shea fat, and (iii) non-lauric cocoa butter replacers (NL-CBR) based on trans-specific hydrogenated liquid oils or liquid fractions. These three classes of cocoa butter alternatives correspond to the three classes of filling fats described above.

In general fillings and creams will be softer than tablets and coatings. The reasons for the higher softness of fillings and creams resides in the higher fat content of these products as compared to tablets and coatings and in the softer nature of the fats contained therein, i.e. the lower SFC at room temperature. Both for filling and cream fats and for coating fats it is important to have a steep SFC-profile, which means that at room temperature the SFC should be sufficiently high, whereas at body temperature the SFC should be low, in order to avoid a "waxy" mouth feel. This explains the similar approach used in the production of filling/cream fats and the so-called hard butters.

Palm fractions used in the production of CBE are typically obtained by wet fractionation, which gives a PMF of better quality as compared to PMF obtained from dry or detergent fractionation, the wet fractionation process however being the more expensive one. In the wet fractionation process use is made of acetone, hexane or any other suitable solvent. The wet fractionation process guarantees a sharp fractionation, with an efficient removal of low melting triglycerides like POO (P = Palmitic acid; O = Oleic acid) and high melting triglycerides like PPP. The wet fractionation is also an efficient process for removing diglycerides from the palm mid fraction, which are to be avoided in CBE products. It is important to mention here that CBEs differ from non-lauric CBR and lauric cocoa butter substitutes in that they are a tempering type of fat, similar to natural cocoa butter. Tempering is a process step in which a molten chocolate mixture is subjected to a temperature conditioning process. In particular, in the tempering step the molten chocolate mixture is subjected to a process involving cooling and heating, with the aim of stimulating and maximising crystallisation of the fat in a stable crystalline form.

The production of non-lauric CBR is described by W. Soon in "Specialty fats versus Cocoa Butter" page 189-192. According to W. Soon, liquid oils like soybean oil, rapeseed oil and sunflower oil are suitable raw materials for a hydrogenation process, as well as liquid fractions like highly fractionated palm olein (iodine value > 68). However, according to W. Soon, care needs to be taken to carry out the hydrogenation process in such a way that production of trisaturated triglycerides (SSS where S = Saturated) is minimised, as these have a high melting point and induce waxiness. This result may be achieved through an appropriate selection of the hydrogenation catalyst. In particular, W. Soon advises to carry out the hydrogenation reaction in the presence of a sulphur poisoned nickel catalyst as this promotes the formation of trans-isomers, which give a steep SFC-profile, formation of SSS isomers being minimised. When producing a palm oil based non-lauric CBR, it is advisable to use as a starting material a palm olein the PPP and PPO/POP content of which is as low as possible. PPP is a trisaturated fatty acid naturally present in palm oil. With PPO and POP saturation of one single fatty acid suffices to build trisaturated fatty acids.

The effect of using a sulphur poisoned Ni-catalyst in a hydrogenation reaction of palm olein in stead of a traditional non trans specific Ni-catalyst on palm olein has been described by H. Mori in "Crystallisation and polymorphism of fats and fatty acids" pg 430-431. According to Mori when using a trans specific catalyst, a confectionary fat with a sharp melting curve is obtained, which is not the case when using conventional hydrogenation catalyst.

US-A-4.205.095 relates to a method for the production of cocoa butter substitutes, according to which a palm mid fraction is subjected to a catalytic hydrogenation reaction in the presence of a nickel, platinum or palladium catalyst. The purpose of the hydrogenation reaction is to extend the possibilities of blending PMF with cacao butter by removing triglycerides containing more than one unsaturated fatty acid (SU₂ and U₃) as much as possible and by converting polyunsaturated hydrocarbon chains of the fatty acids into mono-unsaturated hydrocarbon chains, thereby reducing the iodine value to 38-45, the linoleic acid content to below 2 % and achieving a fat composition with a melting point of between 33-36°C. The cocoa butter substitutes disclosed in US-A-4.205.095 are meant to be used in chocolate products like tablets or coatings.

From US-A-3.686.240 a process is known for producing a vegetable fat product suitable for replacing at least part of cocoa butter in chocolate, the properties of the vegetable fat product being similar to those of cocoa butter. According US-A-3.686.240 this vegetable fat product is obtained by subjecting a palm oil middle melting point fraction (PMF) to a hardening process through hydrogenation. The fractionation and hydrogenation process are carried out with the aim of producing a fat which upon blending with natural cocoa butter does not soften or does not get a lower melting point and thus shows full compatibility with cocoa butter. The full compatibility with cocoa butter implies that the product obtained with this process is a tempering type of fat. It is further explained that the palm mid fraction should be prepared by solvent fractionation using a specific solvent.

The fat composition obtainable with the process of PCT/BE02/00045, which is low in trans fatty acids, proofed to be very suitable for use in for example hard centres and confectionery coatings and tablets.

### 1.3. Caramel.

A third kind of application of fats in the confectionery area is their use in caramel. Caramel is understood to include both high boiling and soft caramels. Fats give a certain consistency to the caramel, they control chewiness and reduce stickiness. In caramels, traditionally hydrogenated liquid oils such as hydrogenated soybean oil or hydrogenated rapeseed oil are used. In stead of these oils, lauric fats like hydrogenated palm kernel or hydrogenated coconut oil can be used as well. Because of the too high content of trans fatty acids or saturated fatty acids of the conventionally used hydrogenated oils, there is a need for alternatives having a low trans fatty acid content, which show a melting profile similar to the conventionally used oils and which may be produced at an acceptable cost for this application.

The process of PCT/BE02/00045 proofed to be suitable for the production of fats for use in caramels.

### 2. OBJECT OF THE INVENTION.

It is an object of the present invention to provide a fat composition for use as a confectionery fat, which is characterised by a steep SFC-profile, which has an interesting nutritional profile, i.e. has a low content of trans fatty acids and a sufficiently low content of saturated fatty acids and which shows a reduced tendency to re-crystallisation or fat blooming.

Another object of this invention is to provide a fat composition which is suitable for use in fillings and in creams, and also in caramel with the aim of replacing therein fats containing high levels of trans fatty acids or saturated fatty acids.

It is a further object of the present invention to provide a fat composition which is suitable for use in confectionery centres, confectionery coatings and tablets, the fat composition being suitable to fully or partially replace fats with a high trans fatty acid content, while maintaining a steep SFC-profile, whereby the confectionery product can be prepared without necessitating tempering step.

### 3. DESCRIPTION OF THE INVENTION.

It has now been found in the present invention that a fat composition suitable for use as confectionery fat can be obtained by subjecting a starting fat composition to a catalytic hydrogenation reaction as described in the characterising part of the first claim.

The starting fat composition is characterised :
(1) by a glyceride composition with:
   - A S₂U content between 30 and 80 wt. %, preferably between 40 and 70 wt. %, most preferably between 45 and 65 wt. %,
   - A SU₂ + U₃ content of below 60 wt. %, preferably between 10 and 50 wt. %, most preferably between 20 and 40 wt. %,
   - A S₃ content of below 20 wt. %, preferably less than 15 wt. %, most preferably less than 10 wt. %
   - A diglyceride content between 3 and 12 wt. %, the glyceride contents being expressed as wt. % with respect to the total amount of di-and triglycerides
(2) by the presence of an amount of interesterified fat, in particular between 10 to 100 wt. % of interesterified fat, preferably 20 to 80 wt. %, most preferably 30 to 70 wt. %. The amounts of interesterified fat are expressed as wt. % with respect to the total amount of fat.

The starting fat composition is subjected to a catalytic hydrogenation until a hydrogenated first fat is obtained which is characterised by a trans fatty acid (TFA) content of less than 30 wt. %, preferably less than 25 wt. %, more preferably less than 20 wt. % with respect to the total fat content of the composition.

In the above, S means saturated fatty acid with a hydrocarbon chain length of 14-24 carbon atoms, and U means unsaturated fatty acid with a hydrocarbon chain length of 14-24 carbon atoms.

The starting fat composition preferably comprises palm oil or a fraction thereof. The starting fat composition may if so desired however also comprise other fats.

The inventor has now found that the incorporation of an amount of interesterified fat in the starting fat composition, results after hydrogenation in a fat having an improved resistance against fat bloom and re-crystallisation, while maintaining all other advantages. The inventor has found that in particular storage stability and shelf life may be further improved. Indeed, certain re-crystallisation and fat bloom phenomena can be retarded by several weeks or months, meaning an increased value for the final end product. Another advantage of the current invention is that a higher amount of the low-trans first fat can be incorporated in the final fat composition as compared to the composition disclosed in PCT/BE02/00045.

The interesterified fat may be a single fat or a mixture of two or more interesterified fats.

A number of applications exist where the risk to the occurrence of fat re-crystallisation and bloom is rather high. This is mostly the case in recipes using a higher amount of cocoa-butter where the composition is not tempered and risking to re-crystallise, or in recipes containing a higher amount of liquid oil where there is a risk to fat migration and re-crystallisation. An example of the first type of recipe, is a confectionery coating containing besides defatted cocoa powder, also some cocoa mass. The cocoa mass is added in order to increase the chocolate taste. An example of the second type of recipe is a confectionery filling containing a high amount of nut paste. These recipes contain a high amount of free liquid oil, which can act as a transport medium for other fat components to migrate to the surface, where re-crystallisation can take place and visible crystals are formed or crystals which during tasting are evaluated as a kind of graininess.

In the present invention it is preferred to use an interesterified fat with a C-12 content of less than 3 wt. %, most preferably less than 1.5 wt. %. This means that it is preferred to use a non-lauric interesterified fat. This is done to reduce the risk to the development of so-called soapy flavour. This is also done so as to reduce the risk to the occurrence of eutectic effects when using the fat composition in combination with non-lauric fats, in particular in applications having a hard texture, like for instance tablets or coatings.

Suitable interesterified fats for use with the starting fat of the present invention are fats containing palm or palm fractions. Examples of suitable fats include interesterified palm, interesterified palm stearin or olein, or fractions or combinations of two or more of these products. These fats are non-lauric and their raw materials are widely available. Furthermore, as these fats contain an interesting amount of solid fat, the extent to which the starting fat needs to be hydrogenated to obtain the desired SFC-profile may be limited, as a consequence of which the risk to the building of trans fatty acids is limited.

When it is desired to increase the sharpness of the SFC-profile and to further improve the mouth feel of the product, the first fat may be subjected to a further fractionation, after the hydrogenation reaction has been terminated. This can be particularly useful when producing fats for application in coatings and tablets, as fractionation allows increasing snap and reducing waxiness.

The first fat obtainable with the process of this invention is preferably characterised by an SFC at 20°C of at least 35 wt. %, preferably at least 50 wt. %, most preferably at least 60 wt. %. High SFC's at 20 °C are particularly desirable when using the first fat as such in tablets or coatings as Iso in fillings or creams containing a high amount of liquid oil, it is preferred that the first fat has a sufficiently high solid fat content, for the filling having a texture which is hard enough.

The first fat is preferably a non temper fat. When using this fat either pure, in combination with other non-temper fats or in combination with a limited amount of temper type fat, stable products can be made without necessitating a tempering step in the manufacturing process, which is an important simplification.

If so desired, the fat composition obtainable with the method of the invention disclosed in the first claim may exclusively contain the first fat, or in other words contain 100 wt. % of the first fat. However, according to the invention the above-described first fat may also be blended with a second fat. Thereto, 10-100 wt. % of the first fat may be blended with 90-0 wt. % of a second fat. The second fat preferably has a C-12 content of less than 5 wt. %, most preferably less than 3 wt. %. To limit this C-12 content, the second fat is preferably substantially free of lauric components.

The second fat preferably contains an amount of a hydrogenated fat or an interesterified fat. In general, such fats will show a good compatibility with the first fat.

To limit the trans fatty acid content of the final fat composition when using a mixture of the first fat with a second fat, it is preferred to use as a second fat a fat having a limited trans fatty acid content. In particular it is preferred that the second fat contains preferably less than 30 or less than 25 wt. % of trans fatty acids.

Very suitable fats for use as second fat are fats containing 70 wt. % or more of palm oil or palm oil fractions, or a combination thereof. Examples of such fats are hydrogenated palm or hydrogenated palm olein, or interesterified palm stearine, as these are fats with sufficient solid parts to give enough structure to the final fat composition, without giving high trans fatty acid levels.

The present invention further relates to the use of fat compositions obtainable with the above described process, or the use of fat compositions as described above.

The invention also relates to confectionery products containing the fat composition obtainable with the above described process, or containing a fat composition as described above. In particular it concerns confectionery products belonging to the group of fillings, creams, hard centres or caramel, or products like confectionery coatings or tablets.

The present invention is further elucidated in the examples and comparative examples given below.

### Examples

### Comparative example A.

A palm oil was dry fractionated so as to obtain a palm mid fraction (PMF) with an IV of 42.Other characteristics of this PMF are given in table 1. This PMF was then subjected to a catalytic hydrogenation, using a catalyst type Pricat 9910 until a product was obtained with the characteristics of sample 1 in table 1.

**Table 1.**

| **Product** | PMF | Sample 1 |
|---|---|---|
| **IV** | 42,0 | 38,6 |

| **FAC** | | |
|---|---|---|
| C12 | 0,26 | 0,28 |
| C14 | 1,01 | 1,05 |
| C16 | 50,25 | 50,23 |
| C18 | 5,14 | 5,66 |
| C18-1 | 37,19 | 40,19 |
| C18-2 | 5,11 | 1,86 |
| C18-3 | 0,00 | 0,00 |
| C 20 | 0,43 | 0,37 |
| **TFA** | 0,71 | 7,71 |
| **SFA** | 57,21 | 57,71 |
| **TFA+SFA** | 57,92 | 65,42 |

| **Triglycerides** | | |
|---|---|---|
| S2U | 69,51 | |
| SU2+U3 | 18,57 | |
| S3 | 1,29 | |
| **Diglycerides** | 8,85 | |

| **SFC** | | |
|---|---|---|
| 10°C | 76,9 | 88,9 |
| 20°C | 46,5 | 71,1 |
| 25°C | 8,4 | 49,1 |
| 30°C | 0,0 | 25,3 |
| 35°C | 0,0 | 11,3 |

### Example 1.

A fat composition was prepared by
(1) first mixing 60 wt. % of the PMF of comparative example A with 40 wt. % of random interesterified palm
(2) followed by subjecting this mixture to a catalytic hydrogenation, using a catalyst type Pricat 9910
The hydrogenation was continued until a product was obtained having the characteristics given in table 2, sample 2. The characteristics of the composition before hydrogenation are also given in table 2 as Initial Fat Composition.

**Table 2.**

| **Product** | Initial Fat Composition | Sample 2 | Sample 3 |
|---|---|---|---|
| **IV** | 46,6 | 40,2 | 43,4 |

| **FAC** | | | |
|---|---|---|---|
| C12 | 0,48 | 0,55 | 0,32 |
| C14 | 1,24 | 1,34 | 1,03 |
| C16 | 49,35 | 50,30 | 43,04 |
| C18 | 4,49 | 4,89 | 6,07 |
| C18-1 | 36,09 | 40,95 | 47,53 |
| C18-2 | 7,41 | 1,13 | 1,09 |
| C18-3 | 0,03 | 0,00 | 0 |
| C 20 | 0,39 | 0,28 | 0,38 |
| **TFA** | 0,94 | 8,38 | 14,51 |
| **SFA** | 56,06 | 57,47 | 50,94 |
| **TFA+SFA** | 57,0 | 65,85 | 65,45 |

| **Triglycerides** | | | |
|---|---|---|---|
| S2U | 56,58 | | |
| SU2+U3 | 29,59 | | |
| S3 | 4,92 | | |
| **Diglycerides** | 8,58 | | |

| **SFC** | | | |
|---|---|---|---|
| 10°C | 69,0 | 87,5 | 86,0 |
| 20°C | 39,3 | 65,4 | 62,8 |
| 25°C | 18,2 | 45,9 | 46,3 |
| 30°C | 8,2 | 27,1 | 29,7 |
| 35°C | 3,5 | 14,3 | 16,6 |

### Example 2.

A sample (sample 3) was prepared by blending 50 wt. % of a first fat, obtained by hydrogenating the Initial Fat Composition of Example 1, with a catalyst type Pricat 9910 to an IV of 39.1, with 50 wt. % of a second fat.

The second fat was obtained by hydrogenating a single fractionated palm olein, with an IV value of 56.6 in the presence of a catalyst type Pricat 9910, until a product was obtained with an IV of 48.1.

The characteristics of sample 3 are given in table 2.

### Example 3.

Confectionery coatings were prepared using the fat composition of respectively comparative sample 1, and sample 2 and sample 3 according to the invention.

The recipe used for preparing these coatings is summarised in table 3. The coatings were prepared according to the following procedure: first the fat composition of the comparative example, sample 2 or sample 3 was molten and 1 % of sorbitan tristearate was added. All ingredients, except part of the fat, were mixed and roll refined. Then the mixed ingredients were further homogenised with the rest of the fat in a mixer with heated jacket at a temperature of 40°C.

**Table 3.**

| **Coating Recipe** | % |
|---|---|
| Fat | 29,2 |
| Sugar | 44,7 |
| Cocoapowder 10/12 | 20,8 |
| Cocoa Mass | 5,1 |
| Lecithine | 0,4 |
| Vanilline | 0,05 |
| Cocoa butter on total fat | 14,8 |

With this coating mixture, tablets were moulded at a temperature of 45°C, whereafter the tablets were cooled for 30' at 5°C and thereafter for 30' at 15°C, following which the tablets were de-moulded. No tempering was applied. The tablets were stored in an incubator for 1 week at 20°C.

The bloom resistance of the tablets was tested by storing in incubators at different temperatures. Thereto, a first incubator was cycled in cycles of 12 hours between a temperature of respectively 15-25 °C, a second incubator was left at a temperature of 25 °C, a third one was maintained at a constant temperature of 28°C.

The results of these bloom tests are given in table 4. Scores are given from "no" , indicating "no bloom" to "++++", indicating very "strong blooming"

**Table 4.**

| Weeks | 15-25 °C | | | 25 °C | | | 28 °C | | |
|---|---|---|---|---|---|---|---|---|---|
| | sample 1 | sample 2 | sample 3 | sample 1 | sample 2 | sample 3 | sample 1 | sample 2 | sample 3 |
| 1 | no | no | no | no | no | no | no | no | no |
| 2 | +/- | no | no | +/- | no | no | +/- | no | no |
| 3 | ++ | + | +/- | + | no | no | +/- | no | no |
| 4 | ++ | + | + | ++ | no | no | + | no | no |
| 5 | ++ | + | + | ++ | no | no | + | no | no |
| 6 | +++ | ++ | ++ | +++ | no | no | ++ | no | no |
| 7 | +++ | ++ | ++ | +++ | no | no | ++ | no | no |
| 8 | +++ | ++ | +++ | +++ | no | no | ++ | no | no |
| 9 | | | | | | | | | |
| 10 | | | | | | | | | |

From the results given in table 4 it can be seen that coatings containing an important amount of cocoa-butter, tend to bloom earlier when containing a fat composition of the type of sample 1 as compared to fats of samples 2 and 3. Samples 2 and 3 are both fats which contain an amount of an interesterified fat and are produced according to the process of the present invention, with the objective of improving bloom resistance.

### Example 4.

The samples of example 3 were used to prepare a filling containing a high amount of liquid oil, originating from hazelnut paste. The recipe of the filling is given in table 5.

**Table 5.**

| **Filling Recipe** | % |
|---|---|
| Fat | 23 |
| Sugar | 40 |
| Cocoa Mass | 5 |
| Hazelnut paste | 25 |
| Skimmed milk powder | 6,6 |
| Lecithine | 0,4 |
| Vanilline | 0,05 |

The fillings were prepared as follows : all ingredients, except the fat were mixed and roll refined. Then the mixture was further homogenised with the molten fat in a mixer with heated jacket at a temperature of 40°C. After homogenisation the mass was cooled to 35°C and poured into aluminium cups with a diameter of 28 mm and a height of 20 mm. Thereafter, the thus obtained fillings were cooled for 30' at 5°C, followed by 30' at 15°C.

The fillings were then stored at 20°C and weekly checked on the appearance of crystals at the surface, which would indicate migration of a fat component or recrystallisation. The results of this test are given in table 6. In this table 6 "no" indicates no crystals at the surface, "+" means visible crystals at the surface.

**Table 6.**

| Week | sample 1 | sample 2 | sample 3 |
|---|---|---|---|
| 1 | no | no | no |
| 2 | no | no | no |
| 3 | no | no | no |
| 4 | no | no | no |
| 5 | no | no | no |
| 6 | + | no | no |
| 7 | + | no | no |
| 8 | + | no | no |
| 9 | | | |
| 10 | | | |

From the results given in table 6 it can be concluded that samples 2 and 3 show a better resistance against migration and re-crystallisation than the comparison example sample nr 1.

## Claims

1. A process for the production of a fat composition, suitable for use as a confectionery fat, **characterised in that** a starting fat composition having the following glyceride composition :
- S₂U between 30 and 80 wt. %, preferably between 40 and 70 wt. %, most preferably between 45 and 65 wt. %
- SU₂ + U₃ < 60 wt. %, preferably between 10 and 50 wt. %, most preferably between 20 and 40 wt. %,
- S₃ < 20 wt. %, preferably less than 15 wt. %, most preferably less than 10 wt. %
- a diglyceride content between 3 and 12 wt. %
- the starting fat composition containing between 10 and 100 wt. %, preferably 20 to 80 wt. %, most preferably between 30 and 70wt. % of interesterified fat,
is subjected to a catalytic hydrogenation so as to obtain a first fat with a trans fatty acid content of less than 30 wt%, preferably less than 25 wt%, most preferably less than 20 wt%, and **in that** the first fat is incorporated in the fat composition, the glyceride contents being expressed as wt. % with respect to the total amount of di-and triglycerides, in which S means a saturated fatty acid with a hydrocarbon chain length of 14-24 carbon atoms, U means unsaturated fatty acid with a hydrocarbon chain length of 14-24 carbon atoms.

2. A process according to claim 1, **characterised in that** the starting fat composition comprises palm oil or a fraction thereof.

3. A process according to claim 1 or 2, **characterised in that** the interesterified fat contains less than 3 wt. %, preferably less than 1.5 wt. % of C12 fatty acid.

4. A process according to any one of claims 1 - 3, **characterised in that** the interesterified fat contains palm oil or a palm oil fraction.

5. A process according to any one of claims 1 - 4, **characterised in that** the first fat is subjected to a fractionation process after termination of the hydrogenation reaction.

6. A fat composition obtainable with the method of any one of the claims 1-5, **characterised in that** the composition has an SFC at 20°C of at least 35 wt. %, preferably at least 50 wt. %, most preferably at least 60 wt. %.

7. A fat composition according to claim 6, **characterised in that** the fat composition is a non temper fat.

8. A fat composition as claimed in claim 6 or 7, **characterised in that** the composition contains 10-100 wt. % of the first fat and 90 - 0 wt. % of a second fat, the second fat having a C-12 fatty acid content of less than 5 wt. %, preferably less than 3 wt. %.

9. A fat composition as claimed in claim 8, in that the second fat contains a hydrogenated or an interesterified fat.

10. A fat composition as claimed in claim 8 or 9, **characterised in that in that** the second fat contains less than 30 wt. %, preferably less than 25 wt. % of trans fatty acids.

11. A fat composition as claimed in any one of claims 8-10, **characterised in that** the second fat contains at least 70% wt. of palm oil or one or more palm oil fractions or a combination thereof.

12. Use of the fat composition obtainable with the process of any one of claims 1-5 or a fat composition according to any one of claims 6-11 for the preparation of a confectionery product.

13. A confectionery product containing the fat composition obtainable with the process of any one of claims 1-5, or a fat composition according to any one of claims 6-11.

14. A confectionery product as claimed in claim 13, **characterised in that** the confectionery product is selected from the group of a filling, a cream, a hard centre or caramel.

15. A confectionery product as claimed in claim 13, **characterised in that** the confectionery product is a coating or a tablet.
